(19) Europäisches Patentamt

European Patent Office

Office européen des brevets

(11) **EP 1 489 131 A1**

(12) **EUROPEAN PATENT APPLICATION**
published in accordance with Art. 158(3) EPC

(43) Date of publication:
**22.12.2004 Bulletin 2004/52**

(21) Application number: **03706910.1**

(22) Date of filing: **31.01.2003**

(51) Int Cl.⁷: **C08J 5/18**, B32B 27/36,
B29C 55/12, C09J 7/02,
G02B 1/10, C08L 67/00

(86) International application number:
**PCT/JP2003/001002**

(87) International publication number:
**WO 2003/082962 (09.10.2003 Gazette 2003/41)**

(84) Designated Contracting States:
**AT BE BG CH CY CZ DE DK EE ES FI FR GB GR
HU IE IT LI LU MC NL PT SE SI SK TR**
Designated Extension States:
**AL LT LV MK RO**

(30) Priority: **28.03.2002 JP 2002090885
28.03.2002 JP 2002090886**

(71) Applicant: **Teijin Dupont Films Japan Limited
Tokyo 100-0011 (JP)**

(72) Inventors:
• **Yoshida, Tetsuo,c/o Teijin DuPont Films Japan
Ltd.
Gifu 503-0123 (JP)**
• **Takehisa, Keita,c/o Teijin DuPont Films Japan
Ltd.
Gifu 503-0123 (JP)**
• **Ichihashi, Tetsuo,c/o Teijin DuPont Japan Ltd.
Gifu 503-0123 (JP)**

(74) Representative: **Cockerton, Bruce Roger et al
Carpmaels & Ransford,
43-45 Bloomsbury Square
London WC1A 2RA (GB)**

(54) **BIAXIALLY ORIENTED POLYESTER FILM**

(57)    A biaxially oriented monolayer or multi-layer polyester film which has semi-transmittability and reflectability, contains a pearlescent pigment having an average long diameter of 0.5 to 125 μm and transmittance which satisfies the following expression (1):

(parallel light transmittance/total light transmittance) x

$$100 \geqq 3 \qquad (1).$$

This polyester film is used in the light source of a liquid crystal display device having excellent visibility when reflected light or transmitted light is used.

**Description**

Field of the Invention

The present invention relates to a biaxially oriented polyester film having semi-transmittability and reflectability. More specifically, it relates to a biaxially oriented polyester film which has excellent visibility when reflected light and transmitted light are used, is used in the light source of a liquid crystal display device and has semi-transmittability and reflectability.

Prior Art

In recent years, liquid crystal displays have been rapidly spread as displays for personal computers, car navigation systems, PDA and portable telephones as they can be easily reduced in weight, thickness and size, and consume less power than CRT displays. However, as liquid crystal displays need light transmitted from a side opposite to the side from which liquid crystal cells are recognized in order to see what are displayed by them, a light source for recognizing the display is required. Although the liquid crystal displays save power, the power consumption of the display of portable electronic equipment such as portable telephones and PDS is large, which is the cause of limiting the time of their use.

To solve this problem, a semi-transmitting and reflecting liquid crystal display device is used. This semi-transmitting and reflecting liquid crystal display device enables a user to recognize its display by reflection of extraneous light when the surrounding environment is light and by turning on its built-in light source making use of its semi-transmittability when the surrounding environment is dark.

However, even with this semi-transmitting and reflecting liquid crystal display device, it is extremely difficult to achieve sufficient visibility for display under reflected light and display under transmitted light. This is because visibility under transmitted light sharply lowers when high visibility is to be obtained by reflected light and visibility under reflected light sharply lowers when high visibility is to be obtained by transmitted light.

As means of obtaining excellent visibility under both transmitted light and reflected light, JP-A 8-179125, JP-A 11-231114 and JP-A 11-271512 (the term "JP-A" as used herein means an "unexamined published Japanese patent application") propose a method of forming a semi-transmitting and reflecting layer containing a pearlescent pigment on a film substrate by coating. However, since the pearlescent pigment is not aligned uniformly in the plane direction of the film substrate by coating, satisfactory reflection properties are hardly obtained in this state. Then, as means of aligning the pearlescent pigment contained in the semi-transmitting and reflecting layer, there is proposed a method of providing shear stress to a coating layer forming the semi-transmitting and reflecting layer. However, this method has disadvantages that the rate of shear between a layer thickness control member and a coating layer and the rate of shear between a coating solution supply member and a coated sheet must be adjusted and that the control of an appearance which is changed by the coating speed and the rates of shear is not easy.

When the adhesion of the interface between the film substrate and the semi-transmitting and reflecting layer is unsatisfactory, the layer may peel off from the substrate after the passage of time. The semi-transmitting and reflecting layer obtained by coating is easily eroded by an organic solvent and may cause a trouble during processing. Further, when the concentration of the pearlescent pigment contained in the coating solution is increased to improve reflectance, the strength of the obtained semi-transmitting and reflecting layer lowers, thereby easily causing a cohesive failure.

Summary of the Invention

It is an object of the present invention to provide a biaxially oriented polyester film which is free from the above problems and defects, is suitable for liquid crystal display and has novel semi-transmittability and reflectability.

It is another object of the present invention to provide a biaxially oriented polyester film which has excellent visibility for liquid crystal display under both reflected light and transmitted light from the back light of a liquid crystal display unit as a light source, has improved adhesion between a crystal display member and a semi-transmitting and reflecting polyester film after the passage of time and is suitable for liquid crystal display.

Other objects and advantages of the present invention will become apparent from the following description.

According to the present invention, firstly, the above objects and advantages of the present invention are attained by a biaxially oriented monolayer polyester film which comprises an aromatic polyester and a pearlescent pigment having an average long diameter of 0.5 to 125 µm in an amount of 0.5 to 30 wt% based on the total weight of the aromatic polyester and the pearlescent pigment and which satisfies the following expression (1):

$$(\text{parallel light transmittance/total light transmittance}) \text{ x}$$

$$100 \geqq 3 \qquad (1).$$

According to the present invention, secondly, the above objects and advantages of the present invention are attained by a biaxially oriented double-layer polyester film which comprises two layers, a polyester layer (A) and a polyester layer (B), the polyester (B) comprising a second aromatic polyester and a pearlescent pigment having an average long diameter of 0.5 to 125 µm in an amount of 0.5 to 30 wt% based on the total weight of the second aromatic polyester and the pearlescent pigment, and the polyester layer (A) comprising a first aromatic polyester but substantially no pearlescent pigment, and which satisfies the following expression (1):

(parallel light transmittance/total light transmittance) x

$$100 \geqq 3 \qquad (1).$$

Further, according to the present invention, thirdly, the above objects and advantages of the present invention are attained by a biaxially oriented multi-layer polyester film which comprises at least three layers, a polyester layer (A), polyester layer (B) and polyester layer (A) in the mentioned order, the polyester layer (B) comprising a second aromatic polyester and a pearlescent pigment having an average long diameter of 0.5 to 125 µm in an amount of 0.5 to 30 wt% based on the second aromatic polyester and the pearlescent pigment, and the polyester layer (A) comprising a first aromatic polyester but no pearlescent pigment, and which satisfies the following expression (1):

(parallel light transmittance/total light transmittance) x

$$100 \geqq 3 \qquad (1).$$

Detailed Description of the Preferred Embodiment

The present invention will be described hereinbelow in detail. A description is first given of the monolayer polyester film.

The aromatic polyester constituting the biaxially oriented monolayer polyester film of the present invention is preferably a copolyester which comprises ethylene terephthalate as the main component (recurring unit), more preferably a copolyester which comprises at least 1 mol% of a comonomer.

Examples of a dicarboxylic acid component as the comonomer include aromatic dicarboxylic acids such as isophthalic acid, phthalic acid and naphthalenedicarboxylic acid, aliphatic carboxylic acids such as adipic acid, azelaic acid, sebacic acid and decanedicarboxylic acid, and alicyclic dicarboxylic acids such as cyclohexanedicarboxylic acid. Examples of a diol component as the comonomer include aliphatic diols such as tetramethylene glycol and hexamethylene glycol, and aliphatic diols such as 1,4-cyclohexanedimethanol. These comonomers may be used alone or in combination of two or more. Out of these, isophthalic acid is particularly preferred as the comonomer from the viewpoint of stretchability at the time of film formation.

The comonomer is preferably contained in an amount of preferably 1 mol% or more as described above. The amount is more preferably 3 mol% or more, much more preferably 5 mol% or more, particularly preferably 8 mol% or more. The upper limit is preferably less than 25 mol%, more preferably less than 18 mol%. When the amount of the monomer is smaller than 1 mol%, it is difficult to eliminate a void in the film. When the amount is larger than 25 mol%, film formation stability may be lost.

Further, the above aromatic polyester may be prepared by copolymerizing an extremely small amount of a component having three or more ester forming functional groups (in limits that a substantially linear polymer is obtained), such as glycerin, pentaerythritol, trimellitic acid or pyromellitic acid or by capping some or all of terminal hydroxyl groups and/or carboxyl groups with a compound having one ester forming functional group such as benzoic acid or methoxypolyalkylene glycol in order to improve hydrolytic resistance.

The intrinsic viscosity (measured in an orthochlorophenol solution at 35° C) of the aromatic polyester is preferably 0.40 dl/g to 1.50 dl/g, more preferably 0.45 dl/g to 1.20 dl/g. When the intrinsic viscosity is lower than 0.40 dl/g, mechanical properties such as tear strength required for a polyester film as a semi-transmitting and reflecting film substrate may become unsatisfactory. When the intrinsic viscosity is higher than 1.50 dl/g, productivity in the raw material production step and film formation step may be reduced.

The above aromatic polyester is not limited by its production process. For example, the process for producing a polyethylene terephthalate copolymer is preferably a process for obtaining a polyester by carrying out an esterification reaction among terephthalic acid, a comonomer and ethylene glycol, followed by the polycondensation reaction of the obtained reaction product.

The aromatic polyester may be optionally mixed with additives such as fluorescence whitener, antioxidant, thermal stabilizer, ultraviolet light absorber, flame retardant and antistatic agent.

The pearlescent pigment as the other component constituting the biaxially oriented monolayer polyester film of the present invention has an average long diameter of 0.5 to 125 μm.

That is, the polyester film of the present invention must comprise the pearlescent pigment in order to provide visibility for liquid crystal display under both transmitted light and reflected light. The pearlescent pigment in the present invention is a pigment which can develop a pearl tone, such as products commercially available as a pearlescent pigment. Out of these, flake mica particles are preferred and flake mica particles coated with titanium dioxide and/or iron oxide are particularly preferred. When flake mica particles coated with titanium dioxide are used as the pearlescent pigment, the surface coverage of the flake mica particles with titanium dioxide is preferably 10 to 50 %. The pearlescent pigment can be produced by a method disclosed by JP-A 2002-129064. The pearlescent pigment can be produced by the following method, for example. Out of the pearlescent pigments, a mica-based titanium pearlescent pigment can be produced by suspending mica fine particles in an aqueous solution of titanium chloride, hydrolyzing the aqueous solution of titanium chloride in the presence of mica to deposit titanium oxide on the surface of mica in order to form a titanium oxide film, rinsing mica covered with the oxide film and baking it. The pearlescent pigment may be acquired under the trade name of IRIODIN (of Merk Japan Co., Ltd.) and Mearlin (of Marl Co., Ltd.).

The average long diameter of the pearlescent pigment in the present invention must be 0.5 to 125 μm. The average long diameter is preferably 0.7 to 70 μm, particularly preferably 0.8 to 40 μm. When the average long diameter of the pearlescent pigment is shorter than 0.5 μm, satisfactory reflection properties are not obtained. When the average long diameter of the pearlescent pigment is longer than 125 μm, the smoothness of the polyester film is lost and the visibility of a display device lowers. Also, the film easily breaks at the time of stretching, and when the draw ratio is reduced, the thickness nonuniformity becomes large, the alignment angle of the pearlescent pigment becomes large, and visibility deteriorates.

The thickness of the flake pearlescent pigment is preferably 0.01 to 10 μm. When the thickness of the flake pearlescent pigment is smaller than 0.01 pm, satisfactory reflection properties are hardly obtained and the pearlescent pigment is easily damaged in the film formation step. When the thickness is larger than 10 pm, the flake-like shape is easily lost and the alignment of the pearlescent pigment by stretching is reduced, thereby making it difficult to obtain visibility under reflected light and transmitted light.

The above pearlescent pigment is desirably aligned in the polyester film at an angle formed between the plane of the film and the plane of the pearlescent pigment, that is, an alignment angle of 30° or less. The alignment angle of the pearlescent pigment is preferably 15° or less. The term "alignment angle" as used herein means the average value of angles formed between the plane surfaces of a fixed number of pearlescent pigments which are flake fillers and the plane of the polyester film. Stated more specifically, any section of the obtained semi-transmitting and reflecting polyester film is photographed by a scanning electron microscope (JSM-5200 of JEOL Ltd.), the alignment angle between the plane surface of the filler and the plane of the polyester film is measured for any 100 pearlescent pigment particles, and the average value of the measurement data is calculated as an alignment angle. When the alignment angle of the pearlescent pigment contained in the polyester is larger than 30°, high visibility under reflected light can be hardly obtained. This alignment can be realized by stretching the film to 2.5 times or more in longitudinal and transverse directions to form the laminated film.

The pearlescent pigment is desirably used after the surface layer of a coating agent such as titanium dioxide is treated with a silane coupling agent or stearic acid. This treatment can prevent the yellowing of the pearlescent pigment by exposure to radiation including ultraviolet radiation, thereby making it possible to use the film without deterioration in visibility under severe outdoor use conditions. Although the method of the above treatment is not particularly limited, the treatment can be accomplished by mixing 0.5 to 5 wt% of a treating agent into the pearlescent pigment and stirring them together at a temperature of 50 to 110°C for 5 to 30 minutes.

The silane coupling agent is a compound represented by the formula $YRSiX_3$. Y is an organic functional group such as vinyl group, epoxy group, amino group or mercapto group, R is an alkylene group such as methylene, ethylene or propylene, and X is an hydrolyzable group or alkyl group such as methoxy group or ethoxy group. Examples of the compound include vinyltriethoxysilane, vinyltrimethoxysilane, γ-glycidoxypropyltrimethoxysilane, γ-glycidoxypropylmethyldiethoxysilane, N-β(aminoethyl)-γ-aminopropyltrimethoxysilane, N-β(aminoethyl)-γ-aminopropylmethyldimethoxysilane and γ-mercaptopropyltrimethoxysilane. The silane coupling agent is preferably a water-soluble or water-dispersible coupling agent. When an alkaline inorganic fine particle such as silica sol is added to this silane coupling agent in an amount of about 10 wt%, the initial reactivity of the silane coupling agent is promoted advantageously. The pH of an aqueous solution containing a silane coupling agent is adjusted to, for example, 4.0 to 7.0, preferably 5.0 to 6.7. When this pH is lower than 4.0, the catalytic activity of the inorganic fine particle is easily lost and when the pH is higher than 7.0, the coating solution is apt to become unstable and a precipitate tends to be produced disadvantageously. The acid for adjusting this pH is an inorganic acid such as hydrochloric acid, nitric acid or sulfuric acid, or an organic acid such as oxalic acid, formic acid, citric acid or acetic acid. Out of these, an organic acid is particularly preferred.

A required amount of a surfactant such as anionic surfactant, cationic surfactant or nonionic surfactant may be added to the aqueous solution.

After the pearlescent pigment is mixed with a water dispersion of the silane coupling agent and stirred to fully adhere the resulting solution to the pigment, it is dried with air at 100 to 130° C, paying attention to prevent the pigments from being stuck to each other.

The solid content of the above water dispersion coating solution of the silane coupling agent is generally 30 wt% or less, preferably 10 wt% or less. The deposition of the silane coupling agent is preferably 1 to 20 g, more preferably 2 to 15 g based on 1 m$^2$ of the surface area (on both sides) of the pearl escent pigment. The crosslinking of the silane coupling agent proceeds while it is mixed with the molten second aromatic polyester resin to reinforce adhesion between mica and the polyester resin.

Since stearic acid has a melting point of 70.5°C, it is added to the pearlescent pigment in an amount of 1 to 5 wt% and stirred at 71 to 80°C for surface treatment. By this treatment with stearic acid, adhesion between the polyester resin and mica is reinforced and deterioration by ultraviolet radiation is suppressed.

The pearlescent pigment may be added to the aromatic polyester before the end of a transesterification reaction or before the start of a polycondensation reaction for the synthesis of the polyester, or before the formation of the polyester film. Alternatively, a master pellet containing a large amount of the pearlescent pigment may be produced and kneaded with a polyester containing no pearlescent pigment at the time of synthesizing the polyester or forming the polyester film to adjust the content of the pearlescent pigment to a predetermined value. When the pearlescent pigment is added before the synthesis of the polyester, it is preferably dispersed in a diol component and added to a reaction system as a slurry. The amount of the pearlescent pigment added to the polyester must be 0.5 to 30 wt%, preferably 1 to 10 wt%, more preferably 2 to 8 wt%. When the amount of the pearlescent pigment is smaller than 0.5 wt%, reflected light may become insufficient and when the amount is larger than 30 wt%, film forming properties may become unsatisfactory.

The polyester film of the present invention may contain inert particles in limits that do not impair the object of the present invention in order to improve the handling properties of the film. Examples of the inert particles include inorganic fine particles containing the IIA, IIB, IVA or IVB element of the periodic table (such as kaolin, alumina, titanium oxide, calcium carbonate, silicon dioxide and barium sulfate) and organic fine particles of heat resistant polymers such as crosslinked silicone resin, crosslinked polystyrene and crosslinked acrylic resin. They may be used alone or in combination of two or more.

The average particle diameter of the inert particles is preferably 0.1 to 5 μm, more preferably 0.5 to 3 μm, particularly preferably 0.8 to 2.5 μm. When the average particle diameter of the inert particles is smaller than 0.1 μm, the dispersion of the inert particles into the polyester becomes unsatisfactory and when slipperiness is to be obtained, parallel radiation (linear) transmittance is apt to lower. When the average particle diameter is larger than 5 μm, the transmittance of the film may deteriorate or the film forming stability may degrade disadvantageously. The amount of the inert particles is preferably 0.001 to 0.5 wt% based on the weight of the polyester. When the amount of the inert particles is smaller than 0.001 wt%, the slipperiness of the polyester film at the time of winding and the handling properties of the polyester film at the time of surface processing tend to deteriorate and when the amount is larger than 0.5 wt%, transmittance lowers disadvantageously. The time of adding the inert particles may be during the polymerization of the polyester or film formation.

The biaxially oriented monolayer polyester film of the present invention has optical properties which satisfy the following expression (1). Thereby, visibility under transmitted light which is the object of the present invention is achieved.

$$\text{(parallel light transmittance/total light transmittance)} \times 100 \geqq 3 \qquad (1)$$

The total light transmittance is measured at a wavelength of 550 nm by a spectrophotometer. It is a percentage of the amount of light transmitted through a semi-transmitting and reflecting laminated polyester film to the amount of light applied to the film when light from a light source is applied to the film. The parallel light transmittance (linear transmittance) is the transmittance of only light transmitted straight through the polyester film, and the total light transmittance is a value measured using an integrating sphere.

When the percentage of the parallel light transmittance to the total light transmittance at 550 nm is less than 3 %, the outline of a character displayed on a liquid crystal display panel gets blurred, thereby reducing visibility. One of the factors of increasing scattered light is a void generated at the interface between the pearlescent pigment and the polyester. To eliminate the void, there are various methods:

1. a method of increasing affinity for a polyester by treating the surface of the pearlescent pigment,
2. a method of increasing the dispersibility and affinity for a pearlescent pigment of a polyester by using a low crystalline copolymer as the polyester, and
3. a method of suppressing the production of a void in the film forming step.

Out of the above methods, the methods 2 and 3 are preferred, and particularly the method 3 in which a void is eliminated as much as possible by reducing the draw ratio and/or setting the heat setting temperature to a temperature close to the melting point is relatively inexpensive and effective. A combination of these methods is particularly preferred. The upper limit of parallel light transmittance cannot be specified but it is difficult to set it to a value larger than 70 % in fact.

The total light transmittance is preferably 20 % or more, more preferably 25 % or more. When the total light transmittance is lower than 20 %, satisfactory visibility under transmitted light is hardly obtained.

The thickness of the biaxially oriented monolayer polyester film of the present invention is not particularly limited but preferably 12 to 125 µm, more preferably 25 to 75 µm. When the thickness is smaller than 12 µm, visibility under reflected light may become insufficient. When the thickness of the polyester film is larger than 125 µm, the stiffness of the film becomes high and the handling properties of the film deteriorate, thereby reducing productivity. The loss of light transmitted through the polyester film becomes large, thereby reducing visibility.

The biaxially oriented polyester film of the present invention is obtained by extruding an aromatic polyester into a film form by an extruder, solidifying it by cooling with a cooling roll to obtain an unstretched film, and biaxially stretching the film sequentially or simultaneously in accordance with a method known per se.

A chip of the aromatic polyester is first dried, melt kneaded with the pearlescent pigment in an extruder at a normal extrusion temperature, that is, its melting point (to be represented by Tm hereinafter) or higher and (Tm + 70°C) or lower, extruded from a die (for example, T die or I die) and solidified by cooling on a casting drum to obtain an unstretched film. In order to improve close contact between the film-like molten product and the casting drum in this step, an electrostatic contact method for providing electrostatic charge to the film-like molten product is preferably employed. The thus obtained unstretched film is heated with a roll or infrared light and stretched in a longitudinal direction to obtain a uniaxially stretched film. This stretching is preferably carried out making use of a difference in speed between two or more rolls. The stretching temperature is preferably the glass transition temperature (to be represented by Tg hereinafter) of the aromatic polyester or higher, more preferably (Tg + 20)°C to (Tg + 40)°C. The draw ratio which depends on the requirements of application is preferably 2.4 to 4.2 times, more preferably 2.5 to 3.9 times, much more preferably 2.7 to 3.8 times. When the draw ratio is lower than 2.4 times, the thickness nonuniformity of the polyester film becomes large, thereby making it difficult to obtain a satisfactory film. When the draw ratio is lower than 2.4 times, stress received by the pearlescent pigment at the time of stretching becomes insufficient, whereby the alignment angle of the pearlesent pigment does not become a desired angle and visibility under reflected light lowers. When the draw ratio is higher than 4.2 times, a rupture easily occurs during the formation of a film. After the film is stretched in the longitudinal direction, an adhesive water-dispersion coating may be applied to one side or both sides of the film as required.

The obtained longitudinally stretched film is preferably stretched in a transverse direction, heat set and thermally relaxed to produce a biaxially oriented film. These treatments are carried out while the film is running. Stretching in the transverse direction is started at a temperature 20° C higher than the glass transition temperature (Tg) of the polyester and carried out while the temperature is raised to a temperature (110 to 140)°C lower than the melting point (Tm) of the polyester. The draw ratio in the transverse direction which depends on the requirements of application is preferably 2.5 to 4.7 times, more preferably 2.6 to 3.9 times, much more preferably 2.8 to 3.8 times. When the draw ratio is lower than 2.5 times, the thickness nonuniformity of the film becomes large, thereby making it difficult to obtain a satisfactory film, and the alignment angle of the pearlescent pigment becomes large, thereby reducing visibility. When the draw ratio is higher than 4.7 times, a rupture easily occurs during the formation of a film.

After stretching in the transverse direction, the film is heat set. The heat setting temperature is preferably (Tg + 70) to (Tm - 10)°C of the polyester. For example, when the polyester is copolymerized polyethylene terephthalate comprising 12 mol% of isophthalic acid, the heat setting temperature is 148 to 218°C. To suppress the production of a void, the heat setting temperature is preferably 200 to 215°C. The heat setting time is preferably 1 to 60 sec. For applications which require a reduction in heat shrinkage factor, thermal relaxation may be optionally carried out.

According to the present invention, there is obtained a semi-transmitting and reflecting polyester film which has a thickness of 12 to 125 µm, an intrinsic viscosity of 0.40 to 1.50 dl/g and an alignment angle of a pearlescent pigment of 30° or less from the plane of the polyester film.

A description is subsequently given of the biaxially oriented double-layer polyester film of the present invention.

This double-layer polyester film consists of a polyester layer (A) and a polyester layer (B), and the polyester layer (A) comprises a first aromatic polyester but no pearlescent pigment. On the other hand, the polyester layer (B) comprises both a second aromatic polyester and a pearlescent pigment.

The first aromatic polyester constituting the polyester layer (A) in the present invention is preferably a crystalline linear saturated polyester which comprises an aromatic dicarboxylic acid component and a diol component, such as polyethylene terephthalate, polyethylene isophthalate, polybutylene terephthalate or polyethylene-2,6-naphthalene dicarboxylate. Out of these, polyethylene terephthalate is particularly preferred from the viewpoints of film forming properties and transparency. The first aromatic polyester may be a homopolymer or copolymer but preferably a homopolymer. When it is a copolymer, the amount of a comonomer is preferably 5 mol% or less.

The second aromatic polyester constituting the polyester layer (B) has a melting point 15°C or more lower than the melting point of the first aromatic polyester. When the difference in melting point between the first aromatic polyester and the second aromatic polyester is smaller than 15° C, a void produced at the interface between the pearlescent pigment and the second aromatic polyester in the stretching step is apt to remain after the heat setting step, thereby reducing the parallel light (linear) transmittance.

The upper limit of the difference in melting point cannot be specified. However, when the difference is 60°C or more, the film forming properties of the second aromatic polyester deteriorate, thereby making it difficult to produce a film.

The second aromatic polyester is preferably a copolyester comprising the same recurring unit as the first aromatic polyester. Examples of the second aromatic polyester are the same copolyesters listed for the aromatic polyester of the above monolayer polyester film.

The polyester layer (A) preferably contains inert particles. Examples of the inert particles are the same as those listed for the monolayer polyester film.

To eliminate a void in the polyester layer (B), the film may be heat set at a temperature higher than the melting point of the second aromatic polyester. In general, when the film is heat set at a temperature higher than the melting point, the film may break. In the case of the preferred double-layer polyester film of the present invention, since the polyester layer (B) has a melting point 15°C or more lower than the melting point of the polyester layer (A) and is supported by the layer (A), normal heat setting is possible. The upper limit of parallel light transmittance cannot be specified but it is difficult to set it to a value larger than 70 % in fact.

The total light transmittance at a wavelength of 550 nm of the laminated polyester film of the present invention is preferably 20 % or more, more preferably 25 % or more. When the total light transmittance is lower than 20 %, satisfactory visibility under transmitted light cannot be obtained.

Similarly, in order to obtain satisfactory visibility under reflected light, the total light reflectance at 550 nm is preferably 40 % or more, more preferably 50 % or more.

To obtain fully bright display with excellent visibility under both transmitted light and reflected light, the sum of the above total light transmittance and the total light reflectance is preferably 80 % or more, more preferably 90 % or more. The total light reflectance is obtained by measuring the amount of light reflected by the film and dividing it by the amount of light applied to the film as the measurement of transmittance described above.

As for the layer constitution of the above double-layer polyester film, preferably, one layer is the polyester layer (A) which contains inert particles and the other is the polyester layer (B) which contains the pearlescent pigment. The thickness proportion of the layer (A) to the layer (B) is 5 to 15/70 to 90. When the thickness proportion of the layer (A) to the layer (B) is less than 5 %, the layer (A) cannot serve as a support layer and when the thickness proportion of the layer (A) is more than 15 %, the concentration of the pearlescent pigment becomes excessive, thereby reducing film forming properties. The total thickness of the film is not particularly limited but preferably 12 to 125 pm, more preferably 25 to 75 μm. When the thickness of the double-layer polyester film is smaller than 12 pm, visibility under reflected light becomes insufficient and when the thickness is larger than 125 μm, the stiffness of the film becomes high and the handling properties of the film deteriorate, thereby reducing productivity. Also, the loss of light transmitted through the polyester film becomes large, thereby reducing visibility.

A biaxially oriented film is produced from the double-layer polyester film of the present invention by a known technique such as sequential biaxial stretching or simultaneous biaxial stretching. The lamination method is a simultaneous multi-layer extrusion method. A specific example of the method will be described in detail hereinbelow.

An unstretched film consisting of the layer A and the layer B is produced by a simultaneous multi-layer extrusion method in which a chip of the first aromatic polyester constituting the polyester layer (A) and a chip of the second aromatic polyester constituting the layer (B) are dried, melt kneaded in different extruders at a general extrusion temperature, that is, melting point (to be represented by Tm hereinafter) or higher and (Tm + 70)°C or lower, and joined together through a feed block in a die. The laminated molten film extruded from the die is solidified by cooling on a casting drum to obtain a laminated unstretched film. In order to improve close contact between the film-like molten product and the casting drum in this step, an electrostatic contact method for providing electrostatic charge to the film-like molten product is preferably employed. The thus obtained unstretched film is heated by a roll or infrared light and stretched in a longitudinal direction to obtain a longitudinally stretched film. This stretching is preferably carried out making use of a difference in speed between two or more rolls. The stretching temperature is higher than the glass transition temperature (to be represented by Tg hereinafter) of the first aromatic polyester, more preferably (Tg + 20) to (Tg + 40)°C, and the draw ratio which depends on the requirements of application is preferably 2.4 to 4.0 times, more preferably 2.5 to 3.9 times, much more preferably 2.7 to 3.8 times. When the draw ratio is lower than 2.4 times, the thickness nonuniformity of the polyester film becomes large, thereby making it difficult to obtain a satisfactory film. When the draw ratio is lower than 2.4 times, stress received by the pearlescent pigment at the time of stretching becomes insufficient, whereby the alignment angle of the pearlescent pigment does not become a desired angle and visibility under reflected light lowers. When the draw ratio is higher than 4.0 times, a rupture easily occurs during the formation of a film. After the film is stretched in the longitudinal direction, an adhesive water-dispersion coating solution may be applied to one side or both sides of the film.

The obtained longitudinally stretched film is preferably stretched in a transverse direction, heat set and thermally relaxed to produce a biaxially oriented film. These treatments are carried out while the film is running. Stretching in the transverse direction is started at a temperature 20°C higher than the glass transition point (Tg) of the first aromatic polyester and carried out while the temperature is raised to a temperature (110 to 140)°C lower than the melting point (Tm) of the first aromatic polyester. The draw ratio in the transverse direction which depends on the requirements of application is preferably 2.5 to 4.2 times, more preferably 2.6 to 3.9 times, much more preferably 2.8 to 3.8 times. When the draw ratio is lower than 2.5 times, the thickness nonuniformity of the film becomes large, thereby making it difficult to obtain a satisfactory film. When the draw ratio is higher than 4.0 times, a rupture easily occurs during the formation of a film.

After stretching in the transverse direction, heat setting is carried out. The preferred heat setting temperature is (Tg + 70) to (Tm - 10)°C of the first aromatic polyester. When the first aromatic polyester is polyethylene terephthalate, it is preferably 180 to 235° C and when the first aromatic polyester is polyethylene-2,6-naphthalene dicarboxylate, it is preferably 220 to 240°C. The heat setting time is preferably 1 to 60 sec. For applications which require a reduction in heat shrinkage factor, thermal relaxation may be optionally carried out.

Thus, according to the present invention, there is obtained a semi-transmitting and reflecting laminated polyester film which has a thickness of 12 to 125 pm, an intrinsic viscosity of 0.40 to 1.50 dl/g and an alignment angle of the pearlescent pigment of the layer (B) of 30° or less from the plane of the polyester film.

As for what is not described of the biaxially oriented double-layer polyester film of the present invention, it should be understood that what has been described of the biaxially oriented monolayer polyester film be applied directly or with modifications obvious to one of ordinary skill in the art.

A description is subsequently given of the biaxially oriented multi-layer polyester film of the present invention. This multi-layer polyester film consists of at least three layers, a polyester layer (A), a polyester layer (B) and a polyester layer (A) in the mentioned order. The two polyester layers (A) contain the first aromatic polyester but no pearlescent pigment whereas the polyester layer (B) contains both the second aromatic polyester and the pearlescent pigment.

As for the layer constitution of this multi-layer polyester film, the polyester layer (A) containing lubricant particles forms surface layers on both sides and the intermediate layer is the polyester layer (B) containing the pearlescent pigment. The number of the layers is basically three. That is, the multi-layer polyester film may have another layer without departing from the scope of the present invention and may consist of five layers which are layer (A), layer (B), layer (A), layer (B) and layer (A). The front and rear surface layers (A) may be made slightly different (for example, in the type and amount of the lubricant, the melting point of the polymer, etc.). The thickness proportion of the layer (A), layer (B) and layer (A) is preferably 5 to 15/70 to 90/5 to 15 (%). When the thickness proportion of the layer (A) is less than 5 %, it cannot serve as a support layer and when the thickness proportion of the layer (A) is more than 15 %, the concentration of the pearlescent pigment becomes excessive, thereby reducing film forming properties. The total thickness of the multi-layer polyester film is not particularly limited but preferably 12 to 125 μm, more preferably 25 to 75 μm. When the thickness of the multi-layer polyester film is smaller than 12 μm, visibility under reflected light may become insufficient. When the thickness of the laminated polyester film is larger than 125 μm, the stiffness of the film becomes high and the handling properties of the film deteriorate, thereby reducing productivity. Also, the loss of light transmitted through the laminated polyester film becomes large, thereby reducing visibility.

The biaxially oriented multi-layer polyester film of the present invention can be produced by the same method as the method of producing the above double-layer polyester film. For example, when the biaxially oriented multi-layer polyester film is a three-layer film, it can be produced by a simultaneous multi-layer extrusion method in which a chip of the first aromatic polyester constituting the polyester layer (A) and a chip of the second aromatic polyester constituting the polyester layer (B) are dried, melt kneaded in different extruders at a general extrusion temperature, that is, melting point (to be represented by Tm hereinafter) or higher and (Tm + 70)°C or lower, and joined together through a feed block in a die to obtain an unstretched film consisting of the layer (A), layer (B) and layer (A). Thereafter, the biaxially oriented multi-layer polyester film can be produced in the same manner as the above double-layer polyester film.

Thus, according to the present invention, there is obtained a multi-layer polyester film which has a thickness of preferably 12 to 125 μm, an intrinsic viscosity of 0.40 to 1.50 dl/g and an alignment angle of the pearlescent pigment of the layer (B) of 30° or less from the plane of the polyester film.

As for what is not described of the biaxially oriented multi-layer polyester film of the present invention, it should be understood that what has been described of the biaxially oriented monolayer and double-layer polyester films be applied directly or with modifications obvious to one of ordinary skill in the art.

The polyester films of the present invention which have been described above may have an adhesive layer on at least one side thereof and a hard coat layer on one side.

It is preferred that the polyester film have an adhesive layer because it can be joined to a liquid crystal display unit made of a polarizing film or a back light. The used adhesive is not particularly limited. For example, acrylic, rubber-based or urethane-based adhesive is preferably used.

The thickness of the adhesive layer is preferably 0.5 to 60 μm. When the thickness of the adhesive layer is smaller than 0.5 μm, satisfactory adhesion is not obtained and when the thickness is larger than 60 μm, the adhesive projects from the end of the film and winding becomes difficult, thereby reducing the handling properties of the film in the production process. The thickness of the adhesive layer is preferably 2 to 40 μm.

It is also preferred that the polyester film have a hard coat layer, because it can suppress the scratching of the semi-transmitting and reflecting polyester film and a reduction in the yield of the final product when a pile of intermediate parts obtained by joining the semi-transmitting and reflecting polyester film to a liquid crystal display unit or a back light are stored or transported.

The hard coat layer is preferably formed on a side opposite to the adhesive layer of the polyester film directly or through an adhesive layer and further positioned as the outermost layer when used as a product. Further, an antireflection layer and antifouling layer may be optionally formed on the outermost layer. The hard coat layer is formed by coating the polyester film in accordance with a known coating technique and curing the coating film. Any known coating technique may be used for the coating of the hard coat layer. Kiss coating, bar coating, die coating, reverse coating, offset gravure coating, Meyer bar coating, gravure coating, roll brushing, spray coating, air knife coating, immersion and curtain coating may be used alone or in combination.

The material used for the hard coat layer is a commonly used material such as a silane-based or radiation curable material. A radiation curable hard coat material is preferred and an ultraviolet radiation (UV) curable hard coat material is particularly preferred.

Examples of the ultraviolet radiation curable material used for the formation of the hard coat layer include urethane-acrylate, epoxy-acrylate and polyester acrylate materials. To form the hard coat layer on the semi-transmitting and reflecting polyester film, a material for forming the hard coat layer is applied to one side of the polyester film, heated and exposed to radiation (such as ultraviolet radiation) to cure the material.

The thickness of the hard coat layer is preferably 0.5 to 10 μm. When the thickness of the hard coat layer is smaller than 0.5 μm, an intermediate part cannot be fully protected and when the thickness is larger than 10 μm, curing by heat or radiation does not proceed fully, thereby causing blocking. The thickness of the hard coat layer is more preferably 1 to 5 μm. An ultraviolet light absorber may be optionally added to the hard coat layer.

The biaxially oriented polyester film of the present invention has excellent semi-transmittability and reflectability, obtains excellent visibility under transmitted light from the back light of a liquid crystal display unit as a light source, and is superior in visibility for liquid crystal display under both transmitted light and reflected light as it contains a pearlescent pigment for reflecting and diffusing visible light in the substrate of the film to develop its characteristic properties. Therefore, the biaxially oriented polyester film is preferably used for the light source of a liquid crystal display device.

Examples

The following examples are provided to further illustrate the present invention. Characteristic property values were measured by the following methods.

(1) alignment angle of pearlescent pigment

Any section of the film is photographed by a scanning electron microscope (JSM-5200 of JEOL Ltd.) at a magnification of X1,000 to X5,000 to measure the alignment angles formed between the plane of the polyester film and the flat surface of the filler of 100 pearlescent pigment particles existent in the pearlescent pigment-containing layer in order to calculate the average value of the measurement data as the alignment angle of the pearlescent pigment.

(2) average long diameter of pearlescent pigment

The long diameters of 100 pearlescent pigment particles are measured by a scanning electron microscope (S-3100 of Hitachi, Ltd.) to obtain the average value of the measurement data.

(3) Total light transmittance and parallel light transmittance

The total light transmittance and parallel light transmittance at 550 nm of the film are measured by an ultraviolet and visible light spectrophotometer (UV-3101PC of Shimadzu Corporation).

(4) Melting point of polyester

The melting point of the polyester is measured by the 910 DSC of Du Pont Instruments at a temperature elevation rate of 20° C/min to obtain its melting peak. The amount of a sample is about 20 mg.

(5) Glass transition temperature (Tg) of polyester

10 mg of a sample is set in a DSC device (Thermal Analyst 2000 differential calorimeter of Du Pont Instruments), molten at 300° C for 5 minutes and quenched in liquid nitrogen. This quenched sample is heated at a rate of 20°C/min to measure its glass transition temperature.

(6) Film forming stability

The film formation state of the film forming step is evaluated based on the following criteria.

○: A film can be formed extremely stably without a rupture.
Δ: A rupture sometimes occurs but a film can be formed.
×: A rupture often occurs and a film cannot be formed at all. (7) Visibility

A 3 mm wide, 3 cm long straight line is drawn on one side of a sample film with a oil-based pen, observed from the opposite side under light from a fluorescent lamp as a light source and evaluated based on the following criteria.

○: The line can be clearly recognized.
Δ: The line is slightly blurred but can be recognized.
×: The line is blurred and hardly recognized.

The visibilities of Examples 5 to 9 and Comparative Examples 5 to 7 were evaluated by the following method which differs from the above evaluation method.
The following hard coat agent (PETD-31 of Dainichi Seika Co., Ltd.) was applied to one side of a sample film by roll coating to a dry thickness of 5 μm, the solvent component was dried to form a film having an uncured hard coat layer which was set in the display unit of a portable telephone, and 30 examiners evaluated the visibility of a test pattern.
The visibility is evaluated based on the following criteria.

◎ : 27 or more examiners judge that visibility under transmitted light or reflected light is higher than that of the current product.
○: 15 or more examiners judge that visibility under transmitted light or reflected light is the same as that of the current product.
×: 4 or more examiners judge that visibility is lower than that of the current product.

(8) Solvent resistance

After the obtained semi-transmitting and reflecting polyester film is immersed in methyl ethyl ketone for 24 hours, the appearance of the film is observed and evaluated based on the following criteria.

○: The appearance of the film remains unchanged visually.
Δ: The appearance of the film is slightly whitened visually.
×: There is a visually marked change such as whitening or peeling in the appearance of the film.

Example 1

Polyethylene terephthalate (intrinsic viscosity: 0.62 dl/g, melting point: 228°C) which comprised 12 mol% of isophthalic acid and contained 0.07 wt% of bulk silica particles having an average particle diameter of 1.7 pm and 3.8 wt% of a pearlescent pigment having an average long diameter of 15 μm (manufactured by Merk Co., Ltd., trade name: IRIODIN 111) was used as a copolyester. This was melt kneaded and extruded by an extruder at 280°C, and solidified by quenching to obtain a 465 μm-thick unstretched film. This unstretched film was heated at 110°C, stretched to 3.0 times in a longitudinal direction, heated at 120°C and stretched to 3.1 times in a transverse direction. Thereafter, the film was heat set at 208° C for 3 seconds to obtain a 50 μm-thick biaxially oriented film. The characteristic properties of the obtained biaxially oriented film are shown in Table 1.

Examples 2 to 4 and Comparative Examples 1 to 3

Biaxially oriented films were manufactured and evaluated in the same manner as in Example 1 except that films were formed from materials shown in Table 1 under conditions shown in Table 1. The evaluation results are shown in Table 1.

## Table 1

| | Polyester | | | Draw ratios (longitudinal direction x transverse direction) | Heat setting temperature °C |
|---|---|---|---|---|---|
| | Type | Thickness μm | Melting point °C | | |
| Ex. 1 | PET/IA12 | 50 | 228 | 2.7 X 2.8 | 200 |
| Ex. 2 | PET/IA 1 | 50 | 256 | 2.6 X 2.7 | 230 |
| Ex. 3 | PET/IA15 | 50 | 218 | 2.9 X 3.0 | 195 |
| Ex. 4 | PET/IA12 | 50 | 228 | 2.7 X 2.8 | 208 |
| C.Ex. 1 | PET/IA12 | 50 | 228 | 3.5 X 3.8 | 208 |
| C.Ex. 2 | PET | 50 | 259 | 1.0 X 1.0 | 230 |
| C.Ex. 3 | PET/IA12 | 50 | 228 | 3.0 X 3.1 | 208 |

| | Pearlescent pigment | | | | Film forming properties | Visibility | Solvent resistance | (Parallel light transmittance/total light transmittance) X 100 % |
|---|---|---|---|---|---|---|---|---|
| | Type | Average long diameter μm | wt% | Alignment angle | | | | |
| Ex. 1 | Irg111 | 15 | 5 | 9 | ○ | ○ | ○ | 10 |
| Ex. 2 | Irg111 | 15 | 5 | 5 | ○ | ○ | ○ | 5 |
| Ex. 3 | Irg111 | 15 | 5 | 9 | ○ | ○ | ○ | 10 |
| Ex. 4 | Irg123 | 25 | 4 | 9 | ○ | ○ | ○ | 12 |
| C.Ex. 1 | - | | 0 | - | ○ | × | ○ | 95 |
| C.Ex. 2 | Irg111 | 15 | 5 | 40 | ○ | ○ | × | 15 |
| C.Ex. 3 | Irg123 | 25 | 40 | - | × | - | - | - |

Ex. = Example, C.Ex. = Comparative Example

PET: polyethylene terephthalate
PET/IA 1: polyethylene terephthalate comprising 1 mol% of isophthalic acid
PET/IA12: polyethylene terephthalate comprising 12 mol% of isophthalic acid
PET/IA15: polyethylene terephthalate comprising 15 mol% of isophthalic acid
Irg111: IRIODIN 111
Irg123: IRIODIN 123

As obvious from the results shown in Table 1, it is understood that the biaxially oriented films of the present invention of Examples 1 to 4 have satisfactory properties for actual use. The films of Comparative Examples 1 and 2 are inferior in visibility under reflected light and the film of Comparative Example 3 is inferior in film forming properties.

Example 5

Polyethylene terephthalate (intrinsic viscosity: 0.64 dl/g, melting point: 258° C) which contained 0.07 wt% of bulk silica particles having an average particle diameter of 1.7 $\mu$m was used as the polyester (A), and polyethylene terephthalate (intrinsic viscosity: 0.64 dl/g) which had a melting point of 228° C, comprised 12 mol% of isophthalic acid and contained 5 wt% of a pearlescent pigment having an average long diameter of 15 $\mu$m and treated with stearic acid (manufactured by Merk Co., Ltd., trade name of IRIODIN 111) was used as the polyester (B). These polyesters (A) and (B) were melt kneaded in different extruders at 280°C, supplied to a double-layer die to ensure that the thickness ratio of the layer (A) to the layer (B) became 6/19, and solidified by quenching to obtain a 465 $\mu$m-thick unstretched film. The treatment with stearic acid was carried out by mixing stearic acid with the pearlescent pigment in a weight ratio of 2/98 and stirring and mixing them together under heating at 75°C. The unstretched film was heated at 110°C, stretched to 3.0 times in a longitudinal direction, heated at 120°C and stretched to 3.1 times in a transverse direction. Thereafter, the film was heat set at 230°C for 3 seconds to obtain a 50 $\mu$m-thick (thickness ratio of 12/38 $\mu$m) biaxially oriented film. The characteristic properties of the obtained semi-transmitting and reflecting laminated polyester film are shown in Table 2.

Examples 6 to 9 and Comparative Examples 4 to 7

Films were manufactured and evaluated in the same manner as in Example 5 except that materials and conditions shown in Table 2 were used. The results are shown in Table 3 and Table 4. It is understood that the films of Examples which satisfy the requirements of the present invention have satisfactory properties for actual use. The films of Comparative Examples are inferior to the products of the prior art.

Table 2

| | Melting point of polyester A (°C) | Melting point of polyester B (°C) | Concentration of pigment | Draw ratios |
|---|---|---|---|---|
| Ex. 5 | 258 | 228 | 5 | 3.0 X 3.1 |
| Ex. 6 | 258 | 228 | 5 | 3.4 X 3.5 |
| Ex. 7 | 258 | 238 | 4 | 3.0 X 3.1 |
| Ex. 8 | 258 | 238 | 4 | 3.4 X 3.5 |
| Ex. 9 | 248 | 228 | 4 | 3.4 X 3.5 |
| C.Ex. 4 | 258 | 248 | 5 | 3.0 X 3.1 |
| C.Ex. 5 | 248 | 243 | 4 | 3.0 X 3.1 |
| C.Ex. 6 | 258 | 198 | 5 | 3.0 X 3.1 |
| C.Ex. 7 | 258 | 198 | 4 | 3.0 X 3.1 |

Table 3

| | Alignment angle (°) | Total light transmittance (%) | Parallel light transmittance (%) | (Parallel light transmittance/total light transmittance) x 100 (%) | Total light reflectance (%) |
|---|---|---|---|---|---|
| Ex. 5 | 19.2 | 41.8 | 9.2 | 22.0 | 51.2 |
| Ex. 6 | 13.4 | 42.1 | 10.9 | 25.9 | 51.9 |
| Ex. 7 | 17.4 | 52.6 | 14.3 | 27.2 | 40.9 |
| Ex. 8 | 13.8 | 53.1 | 15.2 | 28.6 | 41.3 |
| Ex. 9 | 14.3 | 53.4 | 11.2 | 21.0 | 40.8 |
| C.Ex. 4 | 31.4 | 41.2 | 0.9 | 2.2 | 52.7 |
| C.Ex. 5 | 32.5 | 52.8 | 1.3 | 2.3 | 61.5 |
| C.Ex. 6 | - | - | - | - | - |
| C.Ex. 7 | - | - | - | - | - |

Ex. = Example, C.Ex. = Comparative Example

Table 4

| | Visibility | | Film forming stabilityZ |
|---|---|---|---|
| | Transmitted light | Reflected light | |
| Ex. 5 | ◎ | ◎ | ○ |
| Ex. 6 | ◎ | ◎ | Δ |
| Ex. 7 | ○ | ○ | ○ |
| Ex. 8 | ○ | ○ | Δ |
| Ex. 9 | ○ | ○ | Δ |
| C.Ex. 4 | × | ○ | ○ |
| C.Ex. 5 | × | ○ | ○ |
| C.Ex. 6 | - | - | × |
| C.Ex. 7 | - | - | × |
| Ex. = Example, C.Ex. = Comparative Example | | | |

Example 10

Polyethylene terephthalate (intrinsic viscosity: 0.64 dl/g, melting point: 258°C, glass transition temperature: 78° C) which contained 0.07 wt% of bulk silica particles having an average particle diameter of 1. 7 µm was used as the polyester (A) and polyethylene terephthalate (intrinsic viscosity: 0.64 dl/g, melting point: 228°C) which contained 5 wt% of a pearlescent pigment having an average long diameter of 15 µm (manufactured by Merk Co., Ltd., trade name: IRIODIN 111), comprised 12 mol% of isophthalic acid and had a melting point of 228° C was used as the polyester (B). These polyesters (A) and (B) were melt kneaded at 280°C in different extruders, supplied to a three-layer die to ensure that the thickness ratio of the layer (A), layer (B) and layer (A) became 3/19/3, and solidified by quenching to obtain a 465 µm-thick unstretched film. Thereafter, this film was heated at 110° C, stretched to 3.0 times in a longitudinal direction, heated at 120° C and stretched to 3.1 times in a transverse direction. Subsequently, the film was heat set at 230°C for 3 seconds to obtain a 50 µm-thick biaxially oriented laminated film (thickness ratio of 6/38/6 µm). The characteristic properties of the obtained laminated polyester film are shown in Table 5.

Examples 11 to 13 and Comparative Examples 8 to 12

Laminated polyester films were manufactured and evaluated in the same manner as in Example 10 except that materials shown in Table 5 were used. The evaluation results are shown in Table 5.
In Example 13, the stretching temperature was 140° C in both longitudinal and transverse directions and the thickness of the unstretched film was 400 µm. In Comparative Example 11, the draw ratio in the longitudinal direction was 3.4 times and the draw ratio in the transverse direction was 3.6 times.

Table 5

| | Polyester of surface layer | | Polyester of intermediate layer | | Thickness of laminated film μm | Difference in melting point between polyesters °C |
|---|---|---|---|---|---|---|
| | Type | Thickness μm | Type | Thickness μm | | |
| Ex. 10 | PET | 6 (each one layer) | PET/IA (12) | 38 | 50 | 30 |
| Ex. 11 | PET | 5 (each one layer) | PET/IA (8) | 40 | 50 | 20 |
| Ex. 12 | PET | 7 (each one layer) | PET/IA (15) | 36 | 50 | 40 |
| Ex. 13 | PEN | 3 (each one layer) | PET/IA (12) | 37 | 43 | 41 |
| C.Ex. 8 | PET/IA (11) | 6 (each one layer) | PET/IA (13) | 38 | 50 | 5 |
| C.Ex. 9 | PET | 6 (each one layer) | PET/IA (25) | 38 | 50 | 66 |
| C.Ex. 10 | PET | 6 (each one layer) | PET/IA (12) | 38 | 50 | 30 |
| C.Ex. 11 | - | 0 (each one layer) | PET | 50 | 50 | - |
| C.Ex. 12 | PET | 6 (each one layer) | PET/IA (12) | 38 | 50 | 30 |

| | Pearlescent pigment | | | Film forming properties | Visibility | (Parallel light transmittance/total light transmittance) X 100 (%) |
|---|---|---|---|---|---|---|
| | Type | wt% per layer | Alignment angle | | | |
| Ex. 10 | Irg111 | 5 | 5 | O | O | 15 |
| Ex. 11 | Irg111 | 5 | 5 | O | O | 15 |
| Ex. 12 | Irg111 | 5 | 5 | O | O | 17 |
| Ex. 13 | Irg123 | 5 | 5 | O | O | 15 |
| C.Ex. 8 | Irg111 | 5 | 5 | O | X | 2 |
| C.Ex. 9 | Irg111 | 5 | - | X | - | - |
| C.Ex. 10 | - | 0 | - | O | O | 95 |
| C.Ex. 11 | Irg123 | 5 | - | O | X | 1 |
| C.Ex. 12 | Irg123 | 40 | - | X | - | - |

Ex. = Example, C.Ex. = Comparative Example

PET: polyethylene terephthalate
PEN: polyethylene-2,6-naphthalene dicarboxylate
PET/IA (X): polyethylene terephthalate comprising X mol% of isophthalic acid
Irg111: IRIODIN 111
Irg123: IRIODIN 123

EP 1 489 131 A1

As obvious from the results of Table 5, it is understood that the films of Examples 10 to 13 have satisfactory properties even for actual use. On the other hand, the films of Comparative Examples 8 to 12 are inferior to the products of the prior art.

**Claims**

1.  A biaxially oriented monolayer polyester film which comprises an aromatic polyester and a pearlescent pigment having an average long diameter of 0.5 to 125 μm in an amount of 0.5 to 30 wt% based on the total weight of the aromatic polyester and the pearlescent pigment and which satisfies the following expression (1):

    (parallel light transmittance/total light transmittance) x

$$100 \geqq 3 \tag{1}.$$

2.  The film of claim 1, wherein the aromatic polyester is a copolyester comprising ethylene terephthalate as the main component.

3.  The film of claim 1, wherein the copolyester comprises at least 1 mol% of a comonomer.

4.  A biaxially oriented double-layer polyester film which comprises two layers, a polyester layer (A) and a polyester layer (B), the polyester (B) comprising a second aromatic polyester and a pearlescent pigment having an average long diameter of 0.5 to 125 μm in an amount of 0.5 to 30 wt% based on the total weight of the second aromatic polyester and the pearlescent pigment, and the polyester layer (A) comprising a first aromatic polyester but substantially no pearlescent pigment, and which satisfies the following expression (1):

    (parallel light transmittance/total light transmittance) x

$$100 \geqq 3 \tag{1}.$$

5.  The film of claim 4, wherein the first aromatic polyester is a homo- or co-polyester comprising ethylene terephthalate as the main component.

6.  The film of claim 4, wherein the second aromatic polyester is a copolyester comprising ethylene terephthalate as the main component and has a melting point at least 15°C lower than the melting point of the first aromatic polyester.

7.  A biaxially oriented multi-layer polyester film which comprises at least three layers, a polyester layer (A), polyester layer (B) and polyester layer (A) in the mentioned order, the polyester layer (B) comprising a second aromatic polyester and a pearlescent pigment having an average long diameter of 0.5 to 125 μm in an amount of 0.5 to 30 wt% based on the total weight of the second aromatic polyester and the pearlescent pigment, and the polyester layer (A) comprising a first aromatic polyester but no pearlescent pigment, and which satisfies the following expression (1):

    (parallel light transmittance/total light transmittance) x

$$100 \geqq 3 \tag{1}.$$

8.  The film of claim 7, wherein the first aromatic polyester is a homo- or co-polyester comprising ethylene terephthalate as the main component.

9.  The film of claim 7, wherein the second aromatic polyester is a co-polyester comprising ethylene terephthalate as the main component and has a melting point at least 15°C lower than the melting point of the first aromatic polyester.

10. The film of claim 1, 4 or 7, wherein the pearlescent pigment is flake mica coated with one member selected from the group consisting of titanium dioxide, iron oxide and a combination thereof.

**11.** The film of claim 1, 4 or 7 which further has an adhesive layer on at least one side.

**12.** The film of claim 1, 4 or 7 which further has a hard coat layer on one side.

**13.** The film of claim 1, 4 or 7 which further has an adhesive layer on one side and a hard coat layer on the other side directly or through an adhesive layer.

**14.** The film of claim 1, 4, 7, 11, 12 or 13 which is used in the light source of a liquid crystal display device.

**EP 1 489 131 A1**

<table>
<tr><td colspan="2" align="center"><strong>INTERNATIONAL SEARCH REPORT</strong></td><td colspan="2">International application No.<br>PCT/JP03/01002</td></tr>
</table>

| A. CLASSIFICATION OF SUBJECT MATTER |
|---|
| Int.Cl$^7$ C08J5/18, B32B27/36, B29C55/12, C09J7/02, G02B1/10 //C08L67:00 |
| According to International Patent Classification (IPC) or to both national classification and IPC |

| B. FIELDS SEARCHED |
|---|
| Minimum documentation searched (classification system followed by classification symbols)<br>Int.Cl$^7$ C08J5/18, B32B27/36, B29C55/12, G02B1/10 |
| Documentation searched other than minimum documentation to the extent that such documents are included in the fields searched<br>Jitsuyo Shinan Koho       1926–1996   Jitsuyo Shinan Toroku Koho    1996–2003<br>Kokai Jitsuyo Shinan Koho  1971–2003   Toroku Jitsuyo Shinan Koho    1994–2003 |
| Electronic data base consulted during the international search (name of data base and, where practicable, search terms used) |

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y | EP 668513 A1 (TOMOEGAWA PAPER CO., LTD.),<br>23 August, 1995 (23.08.95),<br>Claims; page 4, lines 3 to 19, 26; page 5, lines<br>9 to 21; page 8, lines 5 to 10; page 11, lines 28<br>to 40<br>& JP 8-179125 A<br>Pages 3 to 4, Par. Nos. [0011] to [0013]; page 4,<br>Par. Nos. [0016] to [0017]; page 6, Par. No. [0027];<br>page 7, Par. Nos. [0033], [0037]<br>& US 5746857 A        & DE 69517833 E<br>& KR 277753 B | 1,4,10-14<br>2,3,5-9 |
| X<br><br>Y | JP 9-76393 A (Onoike Kogyo Kabushiki Kaisha),<br>25 March, 1997 (25.03.97),<br>Claims; page 2, Par. No. [0011] to page 3, Par. No.<br>[0015]<br>(Family: none) | 1,4,10,11,<br>14<br>2,3,5-9,<br>12,13 |

| ☒ Further documents are listed in the continuation of Box C. | ☐ See patent family annex. |
|---|---|

| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
|---|---|
| Date of the actual completion of the international search<br>25 April, 2003 (25.04.03) | Date of mailing of the international search report<br>13 May, 2003 (13.05.03) |
| Name and mailing address of the ISA/<br>Japanese Patent Office | Authorized officer |
| Facsimile No. | Telephone No. |

Form PCT/ISA/210 (second sheet) (July 1998)

19

**EP 1 489 131 A1**

### INTERNATIONAL SEARCH REPORT

International application No.

PCT/JP03/01002

| C (Continuation). DOCUMENTS CONSIDERED TO BE RELEVANT | | |
|---|---|---|
| Category* | Citation of document, with indication, where appropriate, of the relevant passages | Relevant to claim No. |
| X<br>Y | JP 11-271511 A (Kimoto Co., Ltd.),<br>08 October, 1999 (08.10.99),<br>Claims; page 2, Par. No. [0016] to page 3, Par. Nos.<br>[0019], [0028] to [0031]<br>(Family: none) | 1,4,10,14<br>2,3,5-9,<br>11-13 |
| Y | JP 2000-241609 A (Daicel Chemical Industries, Ltd.),<br>08 September, 2000 (08.09.00),<br>Claims; page 5, Par. Nos. [0024] to [0026]<br>(Family: none) | 2,3,5,6,<br>8,9 |
| Y | US 6348960 B1 (Kimoto Co., Ltd.),<br>19 February, 2002 (19.02.02),<br>Claims; Fig. 3; column 3, lines 8 to 18; column 5,<br>lines 49 to 55<br>& JP 2000-199809 A<br>Page 3, Par. No. [0018]; page 4, Par. No. [0043] | 7,11-13 |

Form PCT/ISA/210 (continuation of second sheet) (July 1998)

20